# EUROPEAN PATENT SPECIFICATION

(11) **EP 1 749 853 B1**
(45) Date of publication and mention of the grant of the patent: **20.06.2012**
(21) Application number: 06253456.5
(22) Date of filing: 30.06.2006
(51) Int. Cl.: C08K 7/06, C08J 5/04, C08J 5/00, C08K 7/24

(54) **Composite material**
Verbundmaterial
Matériau composite

(30) Priority: 30.06.2005 JP 2005191866; 27.04.2006 JP 2006123293
(43) Date of publication of application: 07.02.2007
(73) Proprietor: Nissin Kogyo Co., Ltd., Ueda-shi Nagano 386-8505 (JP)
(72) Inventor: Noguchi, Toru c/o Nissin Kogyo Co. Ltd.,, Ueda-shi, Nagano 386-8505 (JP); Magario, Akira c/o Nissin Kogyo Co. Ltd.,, Ueda-shi, Nagano 386-8505 (JP)
(74) Representative: Brown, David Leslie

(56) References cited:
- EP-A- 1 367 097
- EP-A- 1 466 940
- EP-A- 1 598 394
- WO-A-03/060002
- CN-A- 1 554 693
- DATABASE WPI Week 200525 Thomson Scientific, London, GB; AN 2005-237172 XP002515009 & JP 2005 068386 A (NISSHIN KOGYO KK) 17 March 2005 (2005-03-17)
- DATABASE WPI Week 200482 Thomson Scientific, London, GB; AN 2004-826868 XP002515008 & JP 2004 331929 A (GOTO M) 25 November 2004 (2004-11-25)

## Description

### BACKGROUND OF THE INVENTION

The present invention relates to a composite material including carbon black and carbon nanofibers.

A composite material is generally provided with physical properties corresponding to the application by combining a matrix material and reinforcing fibers or particles. In the fields of semiconductor manufacturing instruments, optical instruments, microprocessing instruments, and the like, a reduction in the effects of thermal expansion of parts has been demanded. To deal with this demand, various composite materials using reinforcing fibers such as carbon fibers have been proposed (see WO 00/64668, for example).

However, it is difficult to provide a composite material using fibers with a thermal expansion isotropy in comparison with a composite material using particles. Therefore, the application is limited to a product in the shape of a sheet or a plate, or a three-dimensional structure such as a biaxial or triaxial weave must be formed using fibers. The coefficient of linear expansion of an elastomer changes to a large extent under different temperature conditions. In particular, since an elastomer thermally deteriorates at a relatively low temperature due to molecular chain scission, the coefficient of linear expansion rapidly increases in the vicinity of such a temperature (the temperature at which thermal deterioration starts is hereinafter called "heat resistant temperature"). Therefore, a composite material using an clastomer matrix which exhibits a low and stable coefficient of linear expansion over a wide temperature range has not been proposed

EP-A-01466940 describes a carbon fiber composite material comprising an elastomer and a carbon nanofiber dispersed in the elastomer. The elastomer has an unsaturated bond or a group having affinity to the carbon nanofiber. The carbon fiber preferably has an average diameter of 0.5 to 500 nm. The use of carbon black is not stated.

JP-A-2004-331929 describes a moulded product obtained by kneading rubber, carbon black, carbon nanotubes, zinc oxide and anti-aging agent.

EP-A-1367097 describes a carbon fiber reinforced resin composite, comprising defined amounts of vapour grown carbon fibers and/or nanotubes, carbon fibers and resin, and optionally carbon powder. The resin can be a thermoplastic elastomer. The size of the carbon black is not specified. The amount of vapour grown carbon fibers and/or nanotubes is 0.01 to 0.7% by weight of the carbon fiber reinforced resin composition.

CN-A-1554693 describes a method of preparing a composite rubber material, in which carbon nanotubes and liquid rubber are mixed and added into partial hydrogenated nitrile-butadiene rubber to prepare mother rubber. The mother rubber is mixed with the rest of the hydrogenated nitrile-butadiene rubber, carbon black, zinc oxide and sulfurising agent, and the mixture is mixed in a rolling mixer or Banbury mixer and sulfurised to obtain the carbon nanotube modified hydrogenated nitrile-butadiene rubber. The obtained composite is said to have the beneficial effects of raised heat performance.

WO-A-03/060002 describes a rubber composition containing carbon nanotubes in an amount of 0.5-100% by weight on the basis of the amount of rubber. The carbon nanotubes are used as a mixture with carbon black.

The inventors of the invention have proposed a composite material in which carbon nanofibers are uniformly dispersed in an elastomer (e.g. JP-A-2005-68386). In this composite material, the dispersibility of the carbon nanofibers exhibiting high aggregating properties is improved by mixing the elastomer and the carbon nanofibers.

### SUMMARY

According to a first aspect of the invention, there is provided a composite material, comprising:
an elastomer;
carbon nanofibcrs having an average diameter of 0.7 to 15 nm and an average length of 0.5 to 100 micrometers; and
carbon black having an average particle diameter of 10 to 100 nm and a DBP absorption of 100 ml/100g or more, the carbon nanofibers and the carbon black being dispersed in the elastomer,
wherein the elastomer includes an unsaturated bond or a group exhibiting affinity to the carbon nanofibers; and
wherein the composite material includes the carbon nanofibers in an amount of 1 to 30 vol% and the carbon black in an amount of 10 to 40 vol% and has an average coefficient of linear expansion of 100 ppm (1/K) or less and a differential coefficient of linear expansion of 120 ppm (1/K) or less at -80 to 300°C.

According to a second aspect of the invention, there is provided a composite material, comprising:
an elastomer;
carbon nanofibers having an average diameter of 0.7 to 15 nm and an average length of 0.5 to 100 micrometers; and
carbon black having an average particle diameter of 10 to 100 nm and a DBP absorption of 100 ml/100g or more, the carbon nanofibers and the carbon black being dispersed in the elastomer,
wherein the elastomer includes an unsaturated bond or a group exhibiting affinity to the carbon nanofibers; and
wherein the composite material includes the carbon nanofibers in an amount of 1 to 30 vol% and the carbon black in an amount of 10 to 40 vol% and has a ratio of a coefficient of linear expansion in an arbitrary direction X to a coefficient of linear expansion in a direction Y perpendicular to the direction X of 0.7 to 1.3 at -80 to 300°C.

### BRIEF DESCRIPTION OF THE SEVERAL VIEWS OF THE DRAWING

FIG. 1 is a view schematically showing a method of mixing an elastomer and carbon nanofibers utilizing an open-roll method according to one embodiment of the invention.
FIG. 2 is a graph of "temperature - differential coefficient of linear expansion" of Examples 1 and 2 and Comparative Example 2.

### DETAILED DESCRIPTION OF THE EMBODIMENT

The invention may provide a composite material in which carbon black and carbon nanofibers are uniformly dispersed and which shows a small thermal expansion over a wide temperature range.

According to one embodiment of the invention, there is provided a composite material, comprising:
an elastomer;
carbon nanofibers having an average diameter of 0.7 to 15 nm and an average length of 0.5 to 100 micrometers; and
carbon black having an average particle diameter of 10 to 100 nm and a DBP absorption of 100 ml/100g or more, the carbon nanofibers and the carbon black being dispersed in the elastomer,
wherein the elastomer includes an unsaturated bond or a group exhibiting affinity to the carbon nanofibers; and
wherein the composite material includes the carbon nanofibers in an amount of 1 to 30 vol% and the carbon black in an amount of 10 to 40 vol% and has an average coefficient of linear expansion of 100 ppm (1/K) or less and a differential coefficient of linear expansion of 120 ppm (1/K) or less at -80 to 300°C.

The composite material according to this embodiment exhibits a small and stable coefficient of linear expansion over a wide temperature range due to inclusion of the carbon black with a high structure and the carbon nanofibers with a very small diameter. Therefore, the composite material may be used in combination with a material having a small coefficient of linear expansion, such as a metal or a ceramic. In particular, since the composite material can be used over a wide temperature range in comparison with a common elastomer, a product can be easily designed in which the composite material is combined with a material having a small coefficient of linear expansion.

By reinforcing the entire elastomer with the high structure carbon black in which the aggregate is grown, thermal expansion of the composite material can be reduced by using a relatively small amount of carbon nanofibers, whereby the coefficient of linear expansion can be decreased.

Moreover, since the unsaturated bond or the group of the elastomer is bonded to an active site of the carbon nanofiber, in particular to a terminal radical of the carbon nanofiber, the aggregating force of the carbon nanofibers can be reduced, whereby the dispersibility of the carbon nanofibers can be increased. In the resulting composite material, the carbon nanofibers arc uniformly dispersed in the elastomer as a matrix.

According to one embodiment of the invention, there is provided a composite material, comprising:
an elastomer;
carbon nanofibers having an average diameter of 0.7 to 15 nm and an average length of 0.5 to 100 micrometers; and
carbon black having an average particle diameter of 10 to 100 nm and a DBP absorption of 100 ml/100g or more, the carbon nanofibers and the carbon black being dispersed in the elastomer,
wherein the elastomer includes an unsaturated bond or a group exhibiting affinity to the carbon nanofibers; and
wherein the composite material includes the carbon nanofibers in an amount of 1 to 30 vol% and the carbon black in an amount of 10 to 40 vol% and has a ratio of a coefficient of linear expansion in an arbitrary direction X to a coefficient of linear expansion in a direction Y perpendicular to the direction X of 0.7 to 1.3 at -80 to 300°C.

The composite material according to this embodiment does not exhibit anisotropy of the coefficient of linear expansion due to inclusion of the uniformly dispersed carbon black and carbon nanofibers. Therefore, the composite material according to this embodiment may be used not only in the form of a sheet or plate, but also in various other forms.

In this composite material, the carbon nanofibers may have an aspect ratio of 50 or more.

The composite material may have a heat resistant temperature of 300°C or more. Since the composite material may have a heat resistant temperature as high as 300°C or more, the composite material may also be utilized for parts used at a high temperature.

The elastomer according to this embodiment may be a rubber elastomer or a thermoplastic elastomer. When using a rubber elastomer, the elastomer may be in a crosslinked form or an uncrosslinked form. Note that it is preferable to use an elastomer in an uncrosslinked form.

Embodiments of the invention are described below in detail with reference to the drawings.

A method of producing a composite material according to this embodiment includes mixing carbon black in which an aggregate is grown and carbon nanofibers into an clastomer including an unsaturated bond or a group exhibiting affinity to the carbon nanofibers, and dispersing the carbon black and the carbon nanofibers by applying a shear force.

The elastomer preferably has characteristics such as a certain degree of molecular length and flexibility in addition to high affinity to the carbon nanofibers. When dispersing the carbon nanofibers in the elastomer by applying a shear force, it is preferable that the carbon nanofibers and the elastomer be mixed at as high a shear force as possible.

### (I) Elastomer

The elastomer has a molecular weight of preferably 5,000 to 5,000,000, and still more preferably 20,000 to 3,000,000. If the molecular weight of the elastomer is within this range, since the elastomer molecules are entangled and linked, the elastomer exhibits excellent elasticity for dispersing the carbon nanofibers. The elastomer can easily enter the space between the aggregated carbon nanofibers due to viscosity, and can separate the carbon nanofibers due io elasticity. If the molecular weight of the elastomer is less than 5,000, since the elastomer molecules cannot be sufficiently entangled, the effect of dispersing the carbon nanofibers is reduced due to low elasticity, even if a shear force is applied in the subsequent step. If the molecular weight of the elastomer is greater than 5,000,000, since the elastomer becomes too hard, it is difficult to process the elastomer.

The network component of the elastomer in an uncrosslinked form has a spin-spin relaxation time (T2n/30°C) measured at 30°C by a Hahn-echo method using a pulsed nuclear magnetic resonance (NMR) technique of preferably 100 to 3,000 microseconds, and still more preferably 200 to 1,000 microseconds. If the elastomer has a spin-spin relaxation time (T2n/30°C) within the above range, the elastomer is flexible and has a sufficiently high molecular mobility. That is, the elastomer exhibits an appropriate elasticity for dispersing the carbon nanofibers. Moreover, since the elastomer exhibits viscosity, when mixing the elastomer and the carbon nanofibers, the elastomer can easily enter the space between the carbon nanofibers due to high molecular mobility. If the spin-spin relaxation time (T2n/30°C) is shorter than 100 microseconds, the elastomer cannot have a sufficient molecular mobility. If the spin-spin relaxation time (T2n/30°C) is longer than 3,000 microseconds, since the elastomer tends to flow and exhibits a low elasticity, it is difficult to disperse the carbon nanofibers.

The network component of the elastomer in a crosslinked form preferably has a spin-spin relaxation time (T2n) measured at 30°C by the Hahn-echo method using the pulsed NMR technique of 100 to 2,000 microseconds. The reasons therefor are the same as for the uncrosslinked form: Specifically, when crosslinking an uncrosslinked form which satisfies the above conditions, the spin-spin relaxation time (T2n) of the resulting crosslinked form almost falls within the above range.

The spin-spin relaxation time obtained by the Hahn-echo method using the pulsed NMR technique is an index of the molecular mobility of a substance. In more detail, when measuring the spin-spin relaxation time of the elastomer by the Hahn-echo method using the pulsed NMR technique, a first component having a shorter first spin-spin relaxation time (T2n) and a second component having a longer second spin-spin relaxation time (T2nn) are detected. The first component corresponds to the network component (backbone molecule) of the polymer, and the second component corresponds to the non-network component (branched component such as terminal chain) of the polymer. The shorter the first spin-spin relaxation time, the lower the molecular mobility and the harder the elastomer. The longer the first spin-spin relaxation time, the higher the molecular mobility and the softer the elastomer.

As the measurement method in the pulsed NMR technique, a solid-echo method, a Carr-Purcell-Meiboom-Gill (CPMG) method, or a 90-degrce pulse method may also be used instead of the Hahn-echo method. Since the elastomer according to this embodiment has a medium spin-spin relaxation time (T2), the Hahn-echo method is most suitable. In general, the solid-echo method and the 90-degree pulse method arc suitable for measuring a short spin-spin relaxation time (T2), the Hahn-echo method is suitable for measuring a medium spin-spin relaxation time (T2), and the CPMG method is suitable for measuring a long spin-spin relaxation time (T2).

At least one of the main chain, side chain, and terminal chain of the elastomer includes an unsaturated bond or a group having affinity to a terminal radical of the carbon nanofiber, or the elastomer has properties of readily producing such a radical or group. The unsaturated bond or group may be at least one unsaturated bond or group selected from a double bond, a triple bond, and functional groups such as alpha-hydrogen, a carbonyl group, a carboxyl group, a hydroxyl group, an amino group, a nitrile group, a ketone group, an amide group, an epoxy group, an ester group, a vinyl group, a halogen group, a urethane group, a biuret group, an allophanate group, and a urea group.

The carbon nanofiber generally has a structure in which the side surface is formed of a six-membered ring of carbon atoms and the end is closed by introduction of a five-membered ring. Since the carbon nanofiber has a forced structure, a defect easily occurs, and a radical or a functional group tends to be formed at the defect. In this embodiment, since at least one of the main chain, side chain, and terminal chain of the elastomer includes an unsaturated bond or a group having high affinity (reactivity or polarity) to the radical of the carbon nanofiber, the elastomer and the carbon nanofiber can be bonded. This allows the carbon nanofibers to be easily dispersed by overcoming the aggregating force of the carbon nanofibers. When mixing the elastomer and the carbon nanofibers, free radicals produced due to breakage of the elastomer molecules attack the defects of the carbon nanofibers to produce radicals on the surfaces of the carbon nanofibers.

As the elastomer, an elastomer such as natural rubber (NR), epoxidized natural rubber (ENR), styrenc-butadiene rubber (SBR), nitrile rubber (NBR), chloroprene rubber (CR), ethylene propylene rubber (EPR or EPDM), butyl rubber (TTR), chlorobutyl rubber (CIIR), acrylic rubber (ACM), silicone rubber (Q), fluorine rubber (FKM), butadiene rubber (BR), epoxidized butadiene rubber (EBR), epichlorohydrin rubber (CO or CEO), urethane rubber (U), or polysulfide rubber (T); a thermoplastic elastomer such as an olefin-based elastomer (TPO), poly(vinyl chloride)-based elastomer (TPVC), polyester-based elastomer (TPEE), polyurethane-based elastomer (TPU), polyamide-based clastomer (TPEA), or styrene-bascd elastomer (SBS); or a mixture of these elastomers may be used. In particular, a highly polar elastomer which readily produces free radicals during mixing of the elastomer, such as natural rubber (NR) or nitrile rubber (NBR), is preferable. An elastomer having a low polarity, such as ethylene propylene rubber (EPDM), may also be used in this embodiment, since such an elastomer also produces free radicals by setting the mixing temperature at a relatively high temperature (e.g. 50 to 150°C for EPDM).

The elastomer according to this embodiment may be a rubber elastomer or a thermoplastic elastomer. When using a rubber elastomer, the clastomer may be in a crosslinked form or an uncrosslinked form. Note that it is preferable to use an elastomer in an uncrosslinked form.

### (II) Carbon black and carbon nanofiber

As the carbon black according to this embodiment, carbon black of various grades produced using various raw materials may be used. It is preferable that the carbon black have a relatively nigh structure in which an aggregate (agglomerate) formed by fused and connected elementary particles (primary particles) is grown.

The carbon black according to this embodiment has an average elementary particle diameter (average particle diameter) of 10 to 100 nm and a DBP absorption of 100 ml/100 g or more, and preferably has an average elementary particle diameter of 10 to 40 nm and a DBP absorption of 110 to 500 ml/100 g. If the average particle diameter of the carbon black is less than 10 nm, processing (mixing) becomes difficult. If the average particle diameter of the carbon black is greater than 100 nm, the reinforcing effect is insufficient. The reinforcing effect of the carbon black is affected by the degree of structure of the aggregate. Therefore, a large reinforcing effect is obtained when the DBP absorption is 100 cm³/100 g or more.

As the carbon black, carbon black such as ketjen black, SAF, SAF-HS, ISAF, ISAF-HS, HAF, HAF-HS, FEF, FEF-HS, or SRF-HS may be used.

The carbon nanofibers have an average diameter of 0.7 to 15 nm and an average length of 0.5 to 100 micrometers. If the average diameter of the carbon nanofibcrs is less than 0.7 nm, the carbon nanofibers may be damaged during mixing. If the average diameter of the carbon nanofibers is greater than 15 nm, the confinement effect due to the carbon nanofibers and the carbon black is not obtained, whereby the reinforcing effect becomes insufficient. If the average length of the carbon nanofibers is less than 0.5 micrometers, the reinforcing effect is insufficient. If the average length of the carbon nanofibers is greater than 100 micrometers, processing (mixing) is difficult.

The carbon nanofibers preferably have an aspect ratio of 50 or more, and still more preferably 100 to 20,000. If the aspect ratio is less than 50, the effect of confining the elastomer is not obtained, whereby the resulting composite material may flow or be thermally deteriorated at 300°C or less, for example.

It is preferable that the composite material include the carbon nanofibers in an amount of 1 to 30 vol%, and still more preferably 1 to 15 vol%, and include the carbon black in an amount of 10 to 40 vol%. A composite material including the carbon black and the carbon nanofibers at such a volume ratio exhibits a low and stable coefficient of linear expansion at -80 to 300°C, that is, an average coefficient of linear expansion of 100 ppm (1/K) or less and a differential coefficient of linear expansion of 120 ppm (1/K) or less. If the amount of carbon nanofibers is less than 1 vol%, since the elastomer cannot be restrained, the coefficient of linear expansion cannot be reduced. The coefficient of linear expansion can be reduced by increasing the amount of carbon nanofibers to greater than 15 vol%. In practice, it is not desirable to use the carbon nanofibers in an amount of greater than 30 vol%, since a large amount of expensive carbon nanofibers is required. If the amount of carbon black is less than 1 vol%, the coefficient of linear expansion cannot be reduced without adding a large amount of carbon nanofibers. If the amount of fibers is greater than 40 vol%, processing (mixing) becomes difficult.

As examples of the carbon nanofiber, a carbon nanotube and the like can be given. The carbon nanotube has a single-wall structure in which a graphene sheet of a hexagonal carbon layer is closed in the shape of a cylinder, or a multiwall structure in which the cylindrical structures are nested. Specifically, the carbon nanotube may be formed only of either the single-wall structure or the multi-layer structure, or may have the single-wall structure and the multiwall structure in combination. A carbon material having a partial carbon nanotube structure may also be used. The carbon nanotube may also be called a graphite fibril nanotube

A single-wall carbon nanotube or a multiwall carbon nanotube is produced to a desired size using an arc discharge method, laser ablation method, vapor-phase growth method, or the like.

In the arc discharge method, an arc is discharged between electrode materials made of carbon rods in an argon or hydrogen atmosphere at a pressure lower than atmospheric pressure to a small extent to obtain a multiwall carbon nanotube deposited on the cathode. When a catalyst such as nickel/cobalt is mixed into the carbon rod and an arc is discharged, a single-wall carbon nanotube is obtained from soot adhering to the inner side surface of the processing vessel.

In the laser ablation method, a target carbon surface into which a catalyst such as nickel/cobalt is mixed is irradiated with strong pulse laser light from a YAG laser in a noble gas (e.g. argon) to melt and vaporize the carbon surface to obtain a single-wall carbon nanotube.

In the vapor-phase growth method, a carbon nanotube is synthesized by thermally decomposing a hydrocarbon such as benzene or toluene in a vapor phase. As specific examples of the vapor-phase growth method, a floating catalyst method, zcolite-supported catalyst method, and the like can be given.

The carbon nanofibers may be provided with improved adhesion to and wettability with the clastomer by subjecting the carbon nanofibers to a surface treatment such as an ion-injection treatment, sputter-etching treatment, or plasma treatment before mixing the carbon nanofibcrs into the elastomer.

### (III) Mixing carbon black and carbon nanofibers into elastomer and dispersing carbon black and carbon nanofibers by applying shear force

This step may be carried out using an open-roll method, an internal mixing method, a multi-screw extrusion kneading method, or the like.

In this embodiment, an example using an open-roll method with a roll distance of 0.5 mm or less is illustrated as the step of dispersing the carbon nanofibers in the elastomer by applying a shear force.

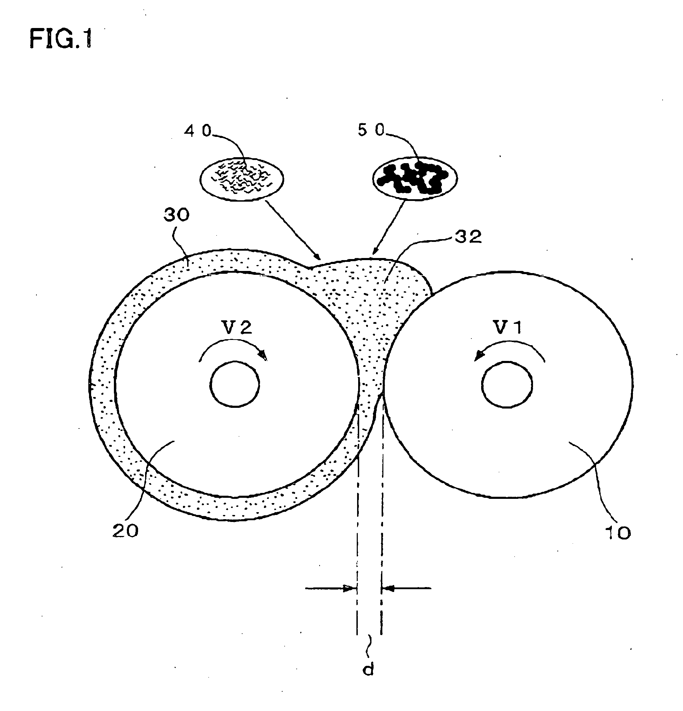

FIG. 1 is a view schematically showing the open-roll method using two rolls. In FIG. 1, a reference numeral 10 indicates a first roll, and a reference numeral 20 indicates a second roll. The first roll 10 and the second roll 20 are disposed at a predetermined distance d (e.g. 1.5 mm). The first and second rolls are rotated normally or reversely. In the example shown in FIG. 1, the first roll 10 and the second roll 20 are rotated in the directions indicated by the arrows.

When causing an elastomer 30 to be wound around the second roll 20 while rotating the first and second rolls 10 and 20, a bank 32 of the clastomer is formed between the rolls 10 and 20. After the addition of carbon black 50 and carbon nanofibcrs 40 to the bank 32, the first and second rolls 10 and 20 arc rotated to obtain a mixture in which the carbon black and the carbon nanofibers arc mixed with the elastomer. The mixture is then removed from the open rolls. After reducing the distance d between the first roll 10 and the second roll 20 to preferably 0.5 mm or less, and still more preferably 0.1 to 0.5 mm, the mixture of the elastomer and the carbon nanofibers is supplied to the open rolls and tight-milled. Tight milling is preferably performed about ten times, for example. When the surface velocity of the first roll 10 is indicated by V1 and the surface velocity of the second roll 20 is indicated by V2, the surface velocity ratio (V1/V2) of the first roll 10 to the second roll 20 during tight milling is preferably 1.05 to 3.00, and still more preferably 1.05 to 1.2. A desired shear force can be obtained by using such a surface velocity ratio.

As the order of adding the carbon black and the carbon nanofibers to the elastomer, it is preferable to add the carbon black before adding the carbon nanofibers.

This causes a high shear force to be applied to the elastomer 30 so that the aggregated carbon nanofibers 40 are separated in such a manner that the carbon nanofibers 40 are removed by the elastomer molecules one by one and are dispersed in the elastomer 30.

In this step, the elastomer and the carbon nanofibers are mixed at a relatively low temperature of preferably 0 to 50°C, and still more preferably 5 to 30°C in order to obtain as high a shear force as possible. When using EPDM as the elastomer, it is preferable to perform two-stage mixing steps. In the first mixing step, EPDM and the carbon nanofibers are mixed at a first temperature which is 50 to 100°C lower than the temperature in the second mixing step in order to obtain as high a shear force as possible. The first temperature is preferably 0 to 50°C, and still more preferably 5 to 30°C. A second temperature of the rolls is set at a relatively high temperature of 50 to 150°C so that the dispersibility of the carbon nanofibers can be improved.

In this step, free radicals are produced in the elastomer shorn by the shear force and attack the surfaces of the carbon nanofibers, whereby the surfaces of the carbon nanofibers are activated. When using natural rubber (NR) as the elastomer, the natural rubber (NR) molecule is cut while being mixed by the rolls to have a molecular weight lower than the molecular weight before being supplied to the open rolls. Radicals arc produced in the cut natural rubber (NR) molecules and attack the surfaces of the carbon nanofibers during mixing, whereby the surfaces of the carbon nanofibers are activated.

Since the elastomer according to this embodiment has the above-described characteristics, that is, the above-described molecular configuration (molecular length), elasticity due to molecular motion, viscosity, and particularly chemical interaction with the carbon nanofibers, dispersion of the carbon nanofibers is facilitated. Therefore, a composite material exhibiting excellent dispersibility and dispersion stability (i.e. dispersed carbon nanofibers rarely reaggregate) of the carbon nanofibers can be obtained. In more detail, when mixing the elastomer and the carbon nanofibers, the elastomer exhibiting viscosity enters the space between the carbon nanofibers, and a specific portion of the elastomer bonds to a highly active site of the carbon nanofiber through chemical interaction. When a high shear force is applied to the mixture of the elastomer having an appropriately long molecular length and high molecular mobility (elastic) and the carbon nanofibers, the carbon nanofibers move accompanying deformation of the elastomer, and the elastomer exhibits a restoring force due to elasticity after shearing, whereby the aggregated carbon nanofibers are separated and dispersed in the elastomer. According to this embodiment, when the mixture is forced out from the narrow space between the rolls, the mixture is deformed to have a thickness greater than the distance between the rolls due to the restoring force of the elastomer resulting from the elasticity. The deformation causes the mixture to which the strong shearing force is applied to flow more complexly, whereby the carbon nanofibers are dispersed in the elastomer. The dispersed carbon nanofibers do not reaggregate due to the chemical interaction with the elastomer, whereby the carbon nanofibers are provided with excellent dispersion stability.

In this step, the above-mentioned internal mixing method or multi-screw extrusion kneading method may be used instead of the open-roll method. In other words, it suffices that this step apply a shear force to the elastomer sufficient to separate the aggregated carbon nanofibers and to produce radicals due to breakage of the elastomer molecules.

After the above step of dispersing the carbon nanofibers in the elastomer, an extrusion step, molding step, crosslinking step, and the like may be carried out using a known method.

In the step of dispersing the carbon nanofibers in the clastomer, or before or after this step, a compounding ingredient usually used in processing of an elastomer such as rubber may be added. As the compounding ingredient, a known compounding ingredient may be used. As examples of the compounding ingredient, a coloring agent (e.g. carbon black), filler (e.g. calcium carbonate), reinforcing agent (e.g. silica, talc, and clay), crosslinking agent (e.g. peroxide), vulcanizing agent, vulcanization accelerator, vulcanization retarder, softener, plasticizer, curing agent, reinforcing agent, filler, aging preventive, colorant, and the like can be given.

### (IV) Composite material obtained by (III)

The composite material according to this embodiment includes an elastomer, 10 to 40 vol% of carbon black, and 1 to 30 vol% of carbon nanofibers, the carbon black and the carbon nanofibers being dispersed in the elastomer, the composite material having an average coefficient of linear expansion of 100 ppm (1/K) or less and a differential coefficient of linear expansion of 120 ppm (1/K) or less at -80 to 300°C.

The average coefficient of linear expansion of the composite material differs depending on the volume ratio of the carbon black and the carbon nanofibers. The average coefficient of linear expansion decreases as the volume ratio of the carbon black and the carbon nanofibers increases, and the average coefficient of linear expansion increases as the volume ratio of the carbon black and the carbon nanofibers decreases. Specifically, the average coefficient of linear expansion of the composite material can be controlled by the volume ratio of the carbon black and the carbon nanofibers. If the amount of carbon nanofibers is less than 1 vol%, since the elastomer cannot be restrained, the coefficient of linear expansion cannot be reduced. The coefficient of linear expansion can be reduced by increasing the amount of carbon nanofibers to greater than 15 vol%. In practice, it is not desirable to use the carbon nanofibers in an amount of greater than 30 vol%, since a large amount of expensive carbon nanofibers is required. If the amount of carbon black is less than 10 vol%, the coefficient of linear expansion cannot be reduced without adding a large amount of carbon nanofibers. If the amount of fibers is greater than 40 vol%, processing (mixing) becomes difficult.

The carbon nanofibers and the carbon black have a correlation in regard to the volume ratio. A low coefficient of linear expansion is maintained by increasing the amount of the carbon black when the amount of the carbon nanofibers is small and increasing the amount of the carbon nanofibers when the amount of the carbon black is small.

The differential coefficient of linear expansion of the composite material is as low as 120 ppm (1/K) or less at -80 to 300°C and is stable over a wide temperature range, so that an instantaneous increase in thermal expansion does not occur. The maximum value of the differential coefficient of linear expansion of the composite material differs depending on the volume ratio of the carbon black and the carbon nanofibers. The maximum value of the differential coefficient of linear expansion decreases as the volume ratio of the carbon black and the carbon nanofibers increases, and the maximum value of the differential coefficient of linear expansion increases as the volume ratio of the carbon black and the carbon nanofibers decreases. Specifically, the maximum value of the differential coefficient of linear expansion of the composite material can be controlled by the volume ratio of the carbon black and the carbon nanofibers. If the amount of carbon nanofibers is less than 1 vol%, the composite material exhibits an unstable coefficient of linear expansion at -80 to 300°C and exhibits a heat resistant temperature of lower than 300°C. When the volume ratio of the carbon nanofibers is less than 15 vol% and the volume ratio of the carbon black is less than 10 vol%, the maximum value of the differential coefficient of linear expansion exceeds 120 ppm (1/K). As a result, the differential coefficient of linear expansion changes to a large extent in the temperature range of -80 to 300°C, whereby thermal expansion becomes unstable in a specific temperature range.

The composite material according to this embodiment has a ratio of the coefficient of linear expansion in an arbitrary direction X to the coefficient of linear expansion in a direction Y perpendicular to the direction X of 0.7 to 1.3 at -80 to 300°C.

When the arbitrary direction X is the rotational direction of the open roll, rigid reinforcing fibers are generally oriented to exhibit anisotropy in which the coefficient of linear expansion significantly decreases in the direction Y perpendicular to the direction X. On the other hand, the composite material according to this embodiment exhibits an isotropic coefficient of linear expansion.

In the composite material according to this embodiment, the elastomer as the matrix is surrounded by the carbon black and the carbon nanofibers, whereby a restraint region is formed. In the restraint region, the movement of the elastomer is limited and restrained. In a composite material including 1 to 30 vol% of thin carbon nanofibers with an average diameter of 0.7 to 15 nm and 10 to 40 vol% of carbon black, since the restraint region becomes significantly small in an arbitrary plane, the elastomer is restrained as if the elastomer is crosslinked. Moreover, the restraint region formed by the carbon nanofibers can provide a coefficient of linear expansion stable against heat over a wide temperature range (e.g. -80 to 300°C).

The composite material may be an uncrosslinked form or a crosslinked form. The form of the composite material may be appropriately selected depending on the application. When the composite material is an uncrosslinked form, the composite material may be recycled.

The composite material according to this embodiment exhibits a heat resistant temperature of 300°C or more.

The heat resistant temperature may be determined by a rapid increase in coefficient of linear expansion resulting from breakage of the molecular chain of the elastomer of the composite material.

In the composite material according to this embodiment, the carbon black and the carbon nanofibers are uniformly dispersed in the elastomer as the matrix. In other words, the elastomer is restrained by the carbon black and the carbon nanofibers. The mobility of the elastomer molecules restrained by the carbon black and the carbon nanofibers is low in comparison with the case where the elastomer molecules are not restrained by the carbon black and the carbon nanofibers. Therefore, the first spin-spin relaxation time (T2n), the second spin-spin relaxation time (T2nn), and the spin-lattice relaxation time (T1) of the composite material according to this embodiment are shorter than those of an elastomer which does not include the carbon black and the carbon nanofibers.

In a state in which the clastomer molecules are restrained by the carbon black and the carbon nanofibers, the number of non-network components (non-reticulate chain components) is considered to be reduced for the following reasons. Specifically, when the molecular mobility of the elastomer is decreased over the entire clastomer by the carbon black and the carbon nanofibers, since the number of non-network components which cannot easily move is increased, the non-network components tend to behave in the same manner as the network components. Moreover, since the non-network components (terminal chains) easily move, the non-network components tend to be adsorbed on the active sites of the carbon black and the carbon nanofibers. It is considered that these phenomena decrease the number of non-network components.

Therefore, the composite material according to this embodiment preferably has values within the following range measured by the Hahn-echo method using the pulsed NMR technique.

Specifically, it is preferable that the uncrosslinked composite material have a first spin-spin relaxation time (T2n) measured at 150°C of 100 to 3,000 microseconds, a second spin-spin relaxation time (T2nn) measured at 150°C of 1,000 to 10,000 microseconds, and a fraction (fnn) of components having a second spin-spin relaxation time of less than 0.2.

It is preferable that the crosslinked composite material have a first spin-spin relaxation time (T2n) measured at 150°C of 100 to 2,000 microseconds, a second spin-spin relaxation time (T2nn) measured at 150°C of zero or 1,000 to 5,000 microseconds, and a fraction (fnn) of components having a second spin-spin relaxation time of less than 0.2.

The spin-lattice relaxation time (T1) measured by the inversion recovery method using the pulsed NMR technique is an index of the molecular mobility of a substance together with the spin-spin relaxation time (T2). In more detail, the shorter the spin-lattice relaxation time of the elastomer, the lower the molecular mobility and the harder the elastomer. The longer the spin-lattice relaxation time of the elastomer, the higher the molecular mobility and the softer the elastomer. Therefore, the composite material in which the carbon black and the carbon nanofibers are uniformly dispersed exhibits a reduced molecular mobility to exhibit T2n, T2nn, and fnn within the above ranges.

The composite material according to this embodiment preferably has a flow temperature, determined by temperature dependence measurement of dynamic viscoelasticity, 20°C or more higher than the flow temperature of the raw material elastomer. In the composite material according to this embodiment, the carbon black and the carbon nanofibers are uniformly dispersed in the elastomer. In other words, the elastomer is restrained by the carbon black and the carbon nanofibers, as described above. In this state, the elastomer exhibits a molecular motion smaller than that of the elastomer which does not include the carbon black and the carbon nanofibers, whereby flowability is decreased. The composite material according to this embodiment having such flow temperature characteristics shows a small temperature dependence of dynamic viscoelasticity to exhibit excellent heat resistance.

The composite material according to this embodiment exhibits stable thermal expansion characteristics over a wide temperature range, as described above. Moreover, the composite material exhibits a small thermal expansion over a wide temperature range due to the small average coefficient of linear expansion. Since the maximum value of the differential coefficient of linear expansion of the composite material is small, the composite material is stable over a wide temperature range. Therefore, an instantaneous increase in thermal expansion does not occur.

Examples according to the invention and comparative examples are described below. Note that the invention is not limited to the following examples.

### Examples 1 to 7 and Comparative Examples 1 to 4

### (1) Preparation of sample

An elastomer shown in Table 1 was mixed with predetermined amounts of carbon black and carbon nanofibers using the open-roll method to obtain samples. As the samples, an uncrosslinked sample and a crosslinked sample were prepared using the following methods.

### (a) Preparation of uncrosslinked sample

1) The elastomer was supplied to six-inch open rolls (roll temperature: 10 to 20°C) and wound around the roll.
2) Carbon black and carbon nanofibers (respectively indicated as "CNT1" and "CNT13" in Table 1) were added to the elastomer. The roll distance was set at 1.5 mm.
3) After the addition of the carbon black and the carbon nanofibers, the mixture of the elastomer, the carbon black, and the carbon nanofibers was removed from the rolls.
4) After reducing the roll distance from 1.5 mm to 0.3 mm, the mixture was supplied to the rolls and tight-milled. The surface velocity ratio of the rolls was set at 1.1. Tight milling was repeatedly performed ten times.
5) After setting the roll distance at a predetermined distance (1.1 mm), the mixture subjected to tight milling was supplied to the rolls and sheeted.

Uncrosslinked samples of Examples 1 to 7 and Comparative Examples 1 to 4 were thus obtained. In Table 1, the raw material elastomer "NR" is natural rubber, the raw material elastomer "EPDM" is ethylene-propylene rubber, and the raw material elastomer "SBR" is styrenc-butadiene rubber. In Table 1, "CNT1" indicates single-wall carbon nanotubes with an average diameter of about 1 nm and an average length of 1 to 10 micrometers, and "CNT13" indicates multiwall carbon nanotubes with an average diameter of about 13 nm and an average length of 1 to 25 micrometers. In Table 1, "ketjen black" has an average particle diameter of 34 nm and a DBP absorption of 500 ml/100 g, "HAF-HS" has an average particle diameter of 27 nm and a DBP absorption of 127 ml/100 g, and "HAF-LS" has an average particle diameter of 28 nm and a DBP absorption of 86 ml/100 g. In Examples 1 and 3 to 7 and Comparative Examples 1 to 4, 2 phr of a peroxide ("PO") was added to 100 phr of the elastomer as a crosslinking agent before adding the carbon nanofibers and the carbon black. Example 2 is an uncrosslinked sample of Example 1.

### (b) Preparation of crosslinked sample

The uncrosslinked samples of Examples 1 and 3 to 7 and Comparative Examples 1 to 4 cut into a die size were placed in a die and press-crosslinked at 175°C and 100 kgf/cm² for 20 minutes.

Table 1 shows the volume ratio of each material added to the composite materials of Examples 1 and 3 to 7 and Comparative Examples 1 to 4.

### (2) Electron microscope observation

The dispersion state of the carbon nanofibers and the carbon black in the uncrosslinked and crosslinked samples was observed using an electron microscope (SEM). It was confirmed that the carbon nanofibers and the carbon black were uniformly dispersed in the clastomer in all the samples.

### (3) Measurement of coefficient of linear expansion and heat resistant temperature

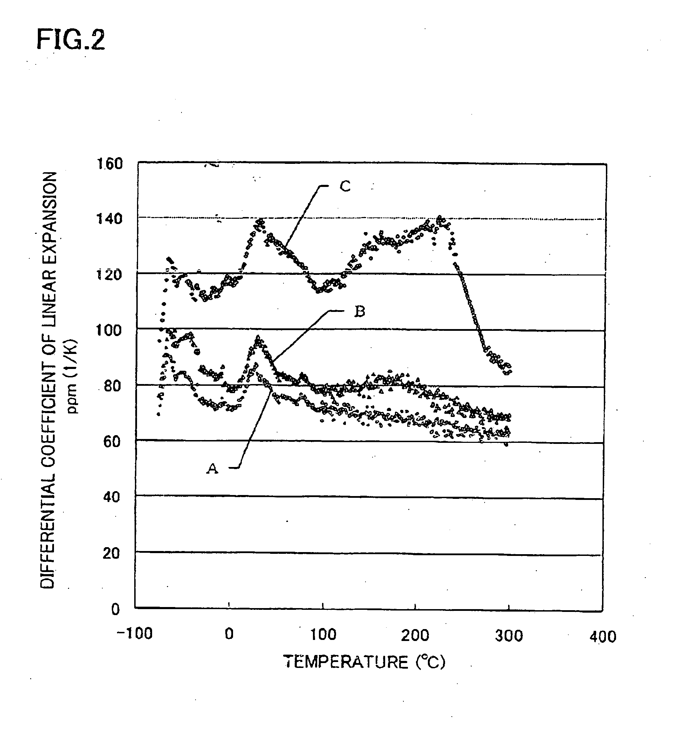

The uncrosslinked sample of Example 2 and the crosslinked samples of Examples 1 and 3 to 7 and Comparative Examples 1 to 4 were subjected to measurement of the coefficient of linear expansion and the heat resistant temperature. The results are shown in Table 1. "TMASS" manufactured by SII was used as the measurement instrument. The measurement sample had dimensions of 1.5×1.0×10 mm. The measurement load was 25 KPa, the measurement temperature was -80 to 350°C, and the temperature rise rate was 2°C/min. FIG 2 is a graph of "temperature (°C) - differential coefficient of linear expansion (ppm (1/K)" of Example 1 (A in FIG. 2), Example 2 (B in FIG 2), and Comparative Example 1 (C in FIG 2).

### (4) Low elongation stress test

The uncrosslinked and crosslinked samples of Examples 1 to 7 and Comparative Examples 1 to 4 (width: 5 mm, length: 50 mm, thickness: I mm) were elongated at a rate of 10 mm/min to determine the stress at 10% deformation. The measurement was performed in a direction (L) parallel to the grain direction of each sample and a direction (T) perpendicular to the direction L. The low elongation stress ratio was calculated as indicated as "stress in direction L/stress in direction T". The results are shown in Table 1.

**TABLE 1**

| | | | Example | | | | | | | Comparative Example | | | |
|---|---|---|---|---|---|---|---|---|---|---|---|---|---|
| | | | 1 | 2 | 3 | 4 | 5 | 6 | 7 | 1 | 2 | 3 | 4 |
| Raw material elastomer | Type of elastomer | | NR | NR | NR | NR | NR | EPDM | SBR | NR | NR | NR | NR |
| | Polar group | | Double bond | Double bond | Double bond | Double bond | Double bond | Double bond Norbornene | Double bond | Double bond | Double bond | Double bond | Double bond |
| | Average molecular weight | | 3,000,000 | 3,000,000 | 3,000,000 | 3,000,000 | 3,000,000 | 200,000 | 150,000 | 3,000,000 | 3,000,000 | 3,000,000 | 3,000,000 |
| | Uncrosslinked form | T2n (30°C) (µsec) | 700 | 700 | 700 | 700 | 700 | 520 | 400 | 700 | 700 | 700 | 700 |
| | | T2o(150°C) (µsec) | 5500 | 5500 | 5500 | 5500 | 5500 | 2200 | 2400 | 5500 | 5500 | 5500 | 5500 |
| | | T2on(150°C) (µsec) | 18000 | 18000 | 18000 | 18000 | 18000 | 16000 | 17000 | 18000 | 18000 | 18000 | 18000 |
| | | Inn (150°C) | 0.381 | 0.381 | 0.381 | 0.381 | 0.381 | 0.405 | 0.286 | 0.381 | 0.381 | 0.381 | 0.381 |
| | | Flow temperature (°C) | 40 | 40 | 40 | 40 | 40 | 55 | 35 | 40 | 40 | 40 | 40 |
| Fiber composite material | Volume ratio | CNT13 (vol%) | 15 | 15 | 8 | 0 | 8 | 8 | 8 | 14 | 0 | 3 | 8 |
| | | CNT1 (vol%) | 0 | 0 | 0 | 1 | 0 | 0 | 0 | 0 | 0.5 | 0 | 0 |
| | | Ketjen black (vol %) | 10 | 10 | 20 | 40 | 0 | 20 | 20 | 0 | 40 | 45 | 0 |
| | | HAF-HS (vol %) | 0 | 0 | 0 | 0 | 20 | 0 | 0 | 0 | 0 | 0 | 0 |
| | | HAF-LS (vol %) | 0 | 0 | 0 | 0 | 0 | 0 | 0 | 0 | 0 | 0 | 20 |
| | Crosslinking | | Cross-linked | Uncross-linked | Cross- linked | Cross-linked | Cross-linked | Cross-linked | Cross-linked | Cross-linked | Cross-linked | Cross-linked | Cross-linked |
| | Mixing capability | | Mixed | Mixed | Mixed | Mixed | Mixed | Mixed | Mixed | Mixed | Mixed | Could not be mixed | Mixed |
| | Average coefficient of linear expansion (ppm/K) | | 71 | 81 | 68 | 70 | 65 | 58 | 62 | 121 | - | - | - |
| | Minimum value of differential coefficient of linear expansion (ppm/K) | | 90 | 99 | 91 | 93 | 88 | 85 | 87 | 141 | - | - | - |
| | Heat resistant temperature(°C,) | | 300 or more | 300 or more | 300 or more | 300 or more | 300 or more | 300 or more | 300 or more | 300 or more | 260 | - | 270 |
| | Low elongation stress ratio | | 1.08 | 1.12 | 1.15 | 1.25 | 1.11 | 1.19 | 1.17 | 1.1 | 1.22 | - | 1.17 |

As shown in FIG 2, it was confirmed that the samples of Examples 1 and 2 had a low and stable coefficient of linear expansion over the measurement temperature range in comparison with the sample of Comparative Example 1. The sample of Comparative Example 1 showed a large change in the differential coefficient of linear expansion in several temperature ranges. On the other hand, the samples of Examples I and 2 according to the invention showed a small change in the differential coefficient of linear expansion over the measurement temperature range. It was also found that the samples of Examples 1 and 2 had a differential coefficient of linear expansion smaller than that of the sample of Comparative Example 1. The samples of Examples 1 and 2 did not show a significant difference in the differential coefficient of linear expansion.

As shown in Table 1, the following items were confirmed by Examples 1 to 7 according to the invention. Specifically, the composite materials of Examples 1 to 7 had an average coefficient of linear expansion of 100 ppm (1/K) or less and a maximum value of the differential coefficient of linear expansion of 120 ppm (1/K) or less at -80 to 300°C. The composite materials of Examples 1 to 7 and Comparative Example 1 had a heat resistant temperature of 300°C or more. The composite material of Comparative Example 1 had an average coefficient of linear expansion of 62 ppm (1/K) and a maximum value of the differential coefficient of linear expansion of 107 ppm (1/K). In Comparative Examples 2 and 4, the average coefficient of linear expansion and the maximum value of the differential coefficient of linear expansion were not calculated since the coefficient of linear expansion was unstable at -80 to 300°C, The samples of Comparative Examples 2 and 4 had a heat resistant temperature of 260°C and 270°C, respectively. Since the sample of Comparative Example 3 could not be mixed, the coefficient of linear expansion, heat resistant temperature, and low elongation stress ratio were not measured. The low elongation stress ratios of the composite materials of Examples 1 to 7 indicate that the composite materials were isotropically reinforced in spite of inclusion of the fibers (i.e. carbon nanofibers).

The uncrosslinked sample of Example 2 showed almost the same results as the crosslinked sample of Example 1.

Therefore, it was confirmed that the composite material according to the invention shows a small and stable thermal expansion over a wide temperature range.

Although only some embodiments of the invention have been described in detail above, those skilled in the art will readily appreciate that many modifications are possible in the embodiments without departing from the novel teachings and advantages of this invention. Accordingly, all such modifications are intended to be included within the scope of this invention.

## Claims

1. A composite material, comprising:
an elastomer;
carbon nanofibers having an average diameter of 0.7 to 15 nm and an average length of 0.5 to 100 micrometers; and
carbon black having an average particle diameter of 10 to 100 nm and a DBP absorption of 100 ml/100g or more, the carbon nanofibers and the carbon black being dispersed in the clastomer,
wherein the elastomer includes an unsaturated bond or a group exhibiting affinity to the carbon nanofibers; and
wherein the composite material includes the carbon nanofibers in an amount of 1 to 30 vol% and the carbon black in an amount of 10 to 40 vol% and has an average coefficient of linear expansion of 100 ppm (1/K) or less and a differential coefficient of linear expansion of 120 ppm (1/K) or less at -80 to 300°C.

2. A composite material, comprising:
an elastomer;
carbon nanofibers having an average diameter of 0.7 to 15 nm and an average length of 0.5 to 100 micrometers; and
carbon black having an average particle diameter of 10 to 100 nm and a DBP absorption of 100 ml/100g or more, the carbon nanofibers and the carbon black being dispersed in the elastomer,
wherein the elastomer includes an unsaturated bond or a group exhibiting affinity to the carbon nanofibers; and
wherein the composite material includes the carbon nanofibers in an amount of 1 to 30 vol% and the carbon black in an amount of 10 to 40 vol% and has a ratio of a coefficient of linear expansion in an arbitrary direction X to a coefficient of linear expansion in a direction Y perpendicular to the direction X of 0.7 to 1.3 at -80 to 300°C.

3. The composite material as defined in claim 1 or 2, wherein the carbon nanofibers have an aspect ratio of 50 or more.

4. The composite material as defined in any one of claims 1 to 3, wherein the composite material is in an uncrosslinked form.

5. The composite material as defined in any one of claims 1 to 3, wherein the composite material is in a crosslinked form.

6. The composite material as defined in any one of claims 1 to 5, wherein the elastomer has a molecular weight of 5,000 to 5,000,000.

7. The composite material as defined in any one of claims 1 to 6,
wherein at least one of a main chain, side chain, and terminal chain of the elastomer includes at least one unsaturated bond or group selected from a double bond, a triple bond, and functional groups such as alpha-hydrogen, a carbonyl group, a carboxyl group, a hydroxyl group, an amino group, a nitrile group, a ketone group, an amide group, an epoxy group, an ester group, a vinyl group, a halogen group, a urethane group, a biuret group, an allophanate group, and a urea group

8. The composite material as defined in any one of claims 1 to 7,
wherein a network component of the elastomer in an uncrosslinked form has a spin-spin relaxation time (T2n) measured at 30°C by a Hahn-ccho method using a pulsed nuclear magnetic resonance (NMR) technique of 100 to 3,000 microseconds.

9. The composite material as defined in any one of claims 1 to 7,
wherein a network component of the elastomer in a crosslinked form has a spin-spin relaxation time (T2n) measured at 30°C by a Hahn-echo method using a pulsed nuclear magnetic resonance (NMR) technique of 100 to 2,000 microseconds.

10. The composite material as defined in any one of claims 1 to 9, wherein the composite material has a heat resistant temperature of 300°C or more.

## Patentansprüche

1. Verbundstoff, welcher:
ein Elastomer,
Carbonnanofasern, welche einen durchschnittlichen Durchmesser von 0,7 bis 15 nm und eine durchschnittliche Länge von 0,5 bis 100 µm haben, und
Ruß, welcher einen durchschnittlichen Teilchendurchmesser von 10 bis 100 nm und eine DBP-Absorption von 100 ml/100 g oder mehr hat, aufweist, wobei die Carbonnanofasern und der Ruß in dem Elastomer verteilt sind,
wobei das Elastomer eine ungesättigte Bindung oder eine Gruppe, welche eine Affinität zu den Carbonnanofasern aufweist, einschließt, und
wobei der Verbundstoff die Carbonnanofaser in einer Menge von 1 bis 30 Vol.-% und den Ruß in einer Menge von 10 bis 40 Vol.-% einschließt und einen durchschnittlichen Längenausdehnungskoeffizient von 100 ppm (1/K) oder weniger und einen Differentiallängenausdehnungskoeffizient von 120 ppm (1/K) oder weniger bei -80 bis 300°C hat.

2. Verbundstoff, welcher:
ein Elastomer,
Carbonnanofasern, welche einen durchschnittlichen Durchmesser von 0,7 bis 15 nm und eine durchschnittliche Länge von 0,5 bis 100 µm haben, und
Ruß, welcher einen durchschnittlichen Teilchendurchmesser von 10 bis 100 nm und eine DBP-Absorption von 100 ml/100 g oder mehr hat, aufweist, wobei die Carbonnanofasern und der Ruß in dem Elastomer verteilt sind,
wobei das Elastomer eine ungesättigte Bindung oder eine Gruppe, welche eine Affinität zu den Carbonnanofasern aufweist, einschließt, und
wobei der Verbundstoff die Carbonnanofaser in einer Menge von 1 bis 30 Vol.-% und den Ruß in einer Menge von 10 bis 40 Vol.-% einschließt, und ein Verhältnis zwischen dem Längenausdehnungskoeffizienten in einer willkürlichen Richtung X zu einem Längenausdehnungskoeffizienten in einer Richtung Y senkrecht zu der Richtung X von 0,7 bis 1,3 bei -80 bis 300°C hat.

3. Verbundstoff wie in Anspruch 1 oder 2 definiert, wobei die Carbonnanofasern ein Querschnittsverhältnis von 50 oder mehr haben.

4. Verbundstoff wie in einem der Ansprüche 1 bis 3 definiert, wobei der Verbundstoff in einer unvernetzten Form vorliegt.

5. Verbundstoff wie in einem der Ansprüche 1 bis 3 definiert, wobei der Verbundstoff in einer vernetzten Form vorliegt.

6. Verbundstoff wie in einem der Ansprüche 1 bis 5 definiert, wobei das Elastomer ein Molekulargewicht von 5.000 bis 5.000.000 hat.

7. Verbundstoff wie in einem der Ansprüche 1 bis 6 definiert,
wobei mindestens eine einer Hauptkette, Seitenkette, und Endkette des Elastomers mindestens eine ungesättigte Bindung oder Gruppe einschließt, welche aus Doppelbindung, Dreifachbindung, und funktionellen Gruppen, wie z.B. alpha-Wasserstoff, Carbonylgruppe, Carboxylgruppe, Hydroxylgruppe, Aminogruppe, Nitrilgruppe, Ketongruppe, Amidgruppe, Epoxygruppe, Estergruppe, Vinylgruppe, Halogengruppe, Urethangruppe, Biuretgruppe, Allophanatgruppe, und Harnstoffgruppe, ausgewählt ist.

8. Verbundstoff wie in einem der Ansprüche 1 bis 7 definiert,
wobei eine Netzwerkkomponente des Elastomers in einer unvernetzten Form eine Spin-Spin- bzw. transversale Relaxationszeit (T2n) gemessen bei 30°C durch ein Hahn-Echoverfahren mittels einer gepulsten kernmagnetischen Resonanztechnik (NMR) von 100 bis 3.000 µs hat.

9. Verbundstoff wie in einem der Ansprüche 1 bis 7 definiert,
wobei eine Netzwerkkomponente des Elastomers in einer vernetzten Form eine Spin-Spin- bzw. transversale Relaxationszeit (T2n) gemessen bei 30°C durch ein Hahn-Echoverfahren mittels einer gepulsten kernmagnetischen Resonanztechnik (NMR) von 100 bis 2.000 µs hat.

10. Verbundstoff wie in einem der Ansprüche 1 bis 9 definiert, wobei der Verbundstoff eine hitzebeständige Temperatur von 300°C oder mehr hat.

## Revendications

1. Matériau composite, comprenant :
un élastomère ;
des nanofibres de carbone ayant un diamètre moyen de 0, 7 à 15 nm et une longueur moyenne de 0,5 à 100 micromètres ; et
du noir de carbone ayant un diamètre moyen de particule de 10 à 100 nm et une absorption de DBP de 100 mL/100 g ou plus, les nanofibres de carbone et le noir de carbone étant dispersés dans l'élastomère,
dans lequel l'élastomère comprend une liaison insaturée ou un groupe présentant une affinité avec les nanofibres de carbone ; et
dans lequel le matériau composite comprend les nanofibres de carbone dans une quantité de 1 à 30 % en volume et le noir de carbone dans une quantité de 10 à 40 % en volume et a un coefficient de dilatation linéaire moyen de 100 ppm (1/K) ou moins et un coefficient de dilatation linéaire différentiel de 120 ppm (1/K) ou moins à -80 à 300 °C.

2. Matériau composite, comprenant :
un élastomère ;
des nanofibres de carbone ayant un diamètre moyen de 0, 7 à 15 nm et une longueur moyenne de 0,5 à 100 micromètres ; et
du noir de carbone ayant un diamètre moyen de particule de 10 à 100 nm et une absorption de DBP de 100 mL/100 g ou plus, les nanofibres de carbone et le noir de carbone étant dispersés dans l'élastomère,
dans lequel l'élastomère comprend une liaison insaturée ou un groupe présentant une affinité avec les nanofibres de carbone ; et
dans lequel le matériau composite comprend les nanofibres de carbone dans une quantité de 1 à 30 % en volume et le noir de carbone dans une quantité de 10 à 40 % en volume et a un rapport entre un coefficient de dilatation linéaire dans une direction arbitraire X et un coefficient de dilatation linéaire dans une direction Y perpendiculaire à la direction X de 0,7 à 1,3 à -80 à 300 °C.

3. Matériau composite selon la revendication 1 ou 2, dans lequel les nanofibres de carbone ont un rapport longueur/diamètre de 50 ou plus.

4. Matériau composite selon l'une quelconque des revendications 1 à 3, dans lequel le matériau composite est sous une forme non réticulée.

5. Matériau composite selon l'une quelconque des revendications 1 à 3, dans lequel le matériau composite est sous une forme réticulée.

6. Matériau composite selon l'une quelconque des revendications 1 à 5, dans lequel l'élastomère a une masse moléculaire de 5 000 à 5 000 000.

7. Matériau composite selon l'une quelconque des revendications 1 à 6,
dans lequel au moins l'une d'une chaîne principale, d'une chaîne latérale et d'une chaîne terminale de l'élastomère comprend au moins une liaison insaturée ou un groupe choisi parmi une double liaison, une triple liaison, et des groupes fonctionnels tels que l'hydrogène en alpha, un groupe carbonyle, un groupe carboxyle, un groupe hydroxyle, un groupe amino, un groupe nitrile, un groupe cétone, un groupe amide, un groupe époxy, un groupe ester, un groupe vinyle, un groupe halogène, un groupe uréthane, un groupe biuret, un groupe allophanate et un groupe urée.

8. Matériau composite selon l'une quelconque des revendications 1 à 7,
dans lequel un composant de réseau de l'élastomère sous une forme ion réticulée a un temps de relaxation transversale (T2n) mesuré à 30 °C par une méthode de l'écho de Hahn utilisant une technique de résonance magnétique nucléaire (RMN) pulsée de 100 à 3 000 microsecondes.

9. Matériau composite selon l'une quelconque des revendications 1 à 7,
dans lequel un composant de réseau de l'élastomère sous une forme réticulée a un temps de relaxation transversale (T2n) mesuré à 30 °C par une méthode de l'écho de Hahn utilisant une technique de résonance magnétique nucléaire (RMN) pulsée de 100 à 2 000 microsecondes.

10. Matériau composite selon l'une quelconque des revendications 1 à 9, dans lequel le matériau composite a une température de résistance à la chaleur de 300 °C ou plus.
